Europäisches Patentamt

European Patent Office

Office européen des brevets

(19)

(11) Numéro de publication: **0 180 526**
**B1**

(12) **FASCICULE DE BREVET EUROPEEN**

(45) Date de publication du fascicule du brevet: **01.08.90**

(51) Int. Cl.⁵: **A 61 M 1/36,** G 01 N 29/02

(21) Numéro de dépôt: **85420175.3**

(22) Date de dépôt: **02.10.85**

(54) **Appareillage de détection et de contrôle de la présence d'un fluide gazeux en relation avec un niveau prédéterminé de liquide dans une enceinte.**

(30) Priorité: **31.10.84 IT 6808584**

(43) Date de publication de la demande:
**07.05.86 Bulletin 86/19**

(45) Mention de la délivrance du brevet:
**01.08.90 Bulletin 90/31**

(84) Etats contractants désignés:
**BE CH DE FR GB IT LI NL SE**

(56) Documents cités:
**FR-A-2 198 640**

(73) Titulaire: **HOSPAL AG**
**Missionsstrasse 60/62**
**CH-4012 Basel (CH)**

(72) Inventeur: **Cianciavicchia, Domenico**
**Via s. Nicola Cavuccio, 23**
**Teramo (IT)**
Inventeur: **Franceschini, Stefano**
**Via Marzabotto 4/16**
**Moglia MN (IT)**

(74) Mandataire: **Gauckler, Jacques**
**HOSPAL C.O.T. SCE Brevets B.P. 21 13, Avenue**
**de Lattre de Tassigny**
**F-69881 Meyzieu Cédex (FR)**

Courier Press, Leamington Spa, England.

## Description

La présente invention concerne un appareillage de détection et de contrôle de la présence d'un fluide gazeux en relation avec un niveau prédéterminé de liquide dans une enceinte.

Plus particulièrement, cette invention concerne un appareillage du type à ultrasons comprenant essentiellement une paire de transducteurs piézoélectriques transmetteur et récepteur, susceptibles d'être placés sur les parois opposées de l'enceinte; un oscillateur qui fournit un signal électrique à fréquence ultrasonique au transducteur transmetteur, et un comparateur qui compare le signal électrique fourni par le transducteur récepteur à un signal de référence et qui déclenche un signal d'alarme lorsque l'écartement entre les signaux à comparer dépasse une valeur prédéterminée. Un tel appareil, sous comparateur, est décrit dans le document FR-A-2198640.

Les appareillages connus de type décrit ci-dessus sont avantageusement utilisés pour des applications très diverses. A titre d'exemple, on mentionne l'utilisation de tels appareillages pour détecter la présence de bulles ou de mousse à l'intérieur d'une enceinte contenant du sang et incorporée dans un circuit extracorporel de sang. Il est inutile de souligner combien il est important de s'assurer d'un fonctionnement correct dans le cas d'une telle application, afin de pouvoir éviter un retour de sang entrainant de l'air qui pourrait provoquer une embolie.

Les appareillages connus mentionnés ci-dessus ont le grave inconvénient de ne pouvoir informer l'opérateur ou le patient des défaillances auxquelles ils peuvent être sujets. Par exemple, un défaut du comparateur qui compare le signal électrique fourni au transducteur récepteur à un signal de référence pourrait par exemple bloquer un tel comparateur et rendre impossible le déclenchement de l'alarme, etc....

Le but de la présente invention est de réaliser un appareillage apte à détecter la présence d'un fluide gazeux dans un liquide contenu dans une enceinte et qui permette d'éviter les inconvénients des appareillages connus du type mentionné ci-dessus.

Ce but est atteint par la présente invention qui concerne un appareillage de détection et de contrôle de la présence d'un fluide gazeux en relation avec un niveau prédéterminé de liquide dans une enceinte et qui comprend:

une paire de transducteurs électro-acoustiques, respectivement transmetteur et récepteur, susceptibles d'être placés face à face en positions diamétralement opposées par rapport à ladite enceinte et en correspondance avec ledit niveau prédéterminé; ledit transducteur récepteur étant apte à coopérer avec ledit transducteur transmetteur et à émettre un signal électrique dont l'amplitude dépend de l'amplitude d'un signal acoustique fourni par ledit transducteur transmetteur et de la quantité de fluide gazeux entre lesdits transducteurs;

des moyens d'alimentation d'un signal électrique à fréquence ultrasonique audit transducteur transmetteur;

des moyens de comparaison du signal électrique fourni par ledit transducteur récepteur avec un signal électrique de référence, lesdits moyens de comparaison étant capables de déclencher un signal d'alarme chaque fois que ledit signal électrique fourni par ledit transducteur récepteur s'écarte d'une valeur prédéterminée dudit signal de référence, caractérisé par le fait de comprendre:

des moyens de traitement reliés auxdits moyens d'alimentation et auxdits moyens de comparaison, capables soit d'interrompre périodiquement l'envoi du signal électrique audit transducteur transmetteur pendant un laps de temps prédéterminé, et de vérifier en correspondance la présence dudit signal d'alarme, soit de recevoir ledit signal d'alarme provoqué par la présence dudit fluide gazeux dans ladite enceinte entre lesdits transducteurs transmetteur et récepteur et, dans chacun des deux cas, de piloter des moyens de commande et/ou des moyens de signalisation.

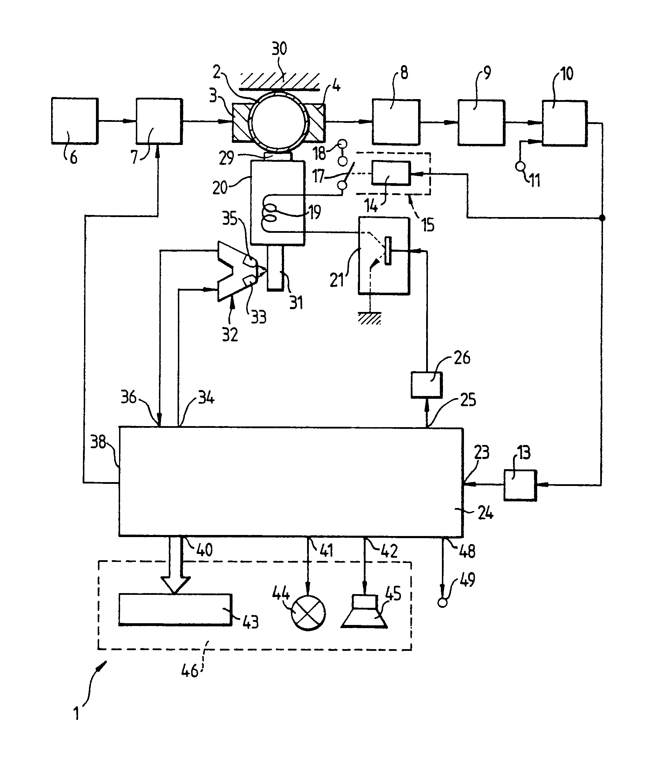

Afin de mieux comprendre la présente invention, on décrira une forme préférée de réalisation, à titre d'exemple non limitatif et en se référant au dessin ci-joint qui représente le schéma d'un appareillage de détection et de contrôle selon la présente invention.

En se référant particulièrement à ce dessin, la référence (1) montre un appareillage de détection et de contrôle de la présence d'un fluide gazeux en correspondance avec un niveau de liquide prédéterminé dans une enceinte (2). Plus particulièrement, mais non exclusivement, le liquide contenu dans l'enceinte (2) peut être du sang, cas où l'enceinte (2) aurait le rôle de chambre de débullage disposée dans un circuit extracorporel de sang.

L'appareillage (1) comprend essentiellement une paire de transducteurs piézoélectriques transmetteur (3) et récepteur (4), susceptibles d'être placés face à face et diamétralement opposés par rapport aux surfaces extérieures de l'enceinte (2) et en relation avec le niveau prédéterminé auquel on souhaite détecter la présence d'un fluide gazeux, tel que des micro-bulles ou de la mousse. Le transducteur transmetteur (3) est alimenté électriquement par un oscillateur (6), susceptible de fournir un signal électrique à fréquence ultrasonique; par exemple 2 MhZ, auquel fait suite un amplificateur (7) avantageusement de type différentiel. Le transducteur récepteur (4), construit avec un matériau identique à celui du transducteur (3) - par exemple avec une céramique piézoélectrique -, est connecté à l'entrée d'un amplificateur (8), filtre de bande, dont la sortie est connectée à l'entrée d'un circuit détecteur de pic (9) de type connu en soi. La sortie de ce dernier est connectée à la première entrée d'un comparateur de seuil (10), dont la seconde entrée reçoit un signal de la borne (11), reliée d'une manière non représentée à un générateur de signaux de référence.

La sortie du comparateur (10) est connectée, soit à un circuit (13) d'interface, soit à l'entrée d'alimentation d'une bobine (14) d'excitation d'un relais (15). Ce dernier possède un interrupteur (17) de type normalement ouvert, actionné par la bobine (14) et dont la première borne est reliée à la borne (18), qui est à son tour connectée d'une manière non représentée à une source d'alimentation de courant continu.

La deuxième borne de l'interrupteur (17) est connectée a la première borne d'une bobine (19), élément d'un électro-aimant (20). La deuxième borne de la bobine (19), est reliée à la masse par l'intermédiaire d'un interrupteur électronique (21), réalisé de manière appropriée à l'aide d'un ou de plusieurs transistors.

La sortie du circuit (13) d'interface est connectée à l'entrée (23) d'une unité de traitement (24) réalisée avec un microprocesseur.

Une sortie (25) de l'unité (24) est connectée par un circuit d'interface (26), à une entrée de commande de l'interrupteur électronique (21) lequel a pour fonction, avec la coopération de l'interrupteur (17), d'alimenter la bobine (19) de l'électro-aimant (20) en reliant les bornes opposées respectivement à la masse et à la source d'alimentation précitée.

L'électro-aimant (20) a pour fonction de bloquer le débit du liquide qui s'écoule dans l'enceinte (2) par le déplacement d'un noyau (29) en direction de l'enceinte (2) et contre un élément de référence indiqué par le repère (30), qui occupe une position fixe par rapport au corps de l'électro-aiomant (20), en position opposée par rapport à l'enceinte (2).

Le noyau (29) présente du côté opposé à l'enceinte (2), un appendice (31) dont la position axiale est contrôlée par un transducteur optique (32) à réflexion de type connu. Un tel transducteur comprend essentiellement un élément photoémetteur (33) susceptible de recevoir un signal électrique depuis une sortie (34) de l'unité de traitement (24) et un élément photo-récepteur (35) apte à recevoir un signal optique emis par l'élément photoémetteur (33) et réfléchi au moyen de l'appendice (31), susceptible d'envoyer un signal électrique à l'entrée (36) de l'unité de traitement (24). Cette dernière présente une sortie (38) qui émet périodiquement un signal électrique, qui, envoyé à une entrée de contrôle de l'amplificateur différentiel (7), bloque la transmission du signal engendré par l'oscillateur (6) et dirigé vers le transducteur transmetteur (3). A titre d'exemple, le signal émis par la sortie (38) peut avoir une période de 200 millisecondes et une durée de quelques millisecondes. D'autre part, dans le cas où l'amplificateur (7) possède un étage de type différentiel, un tel signal se trouvant à la sortie (38), peut être utilisé pour interdire un circuit générateur de courant présent dans l'étage différentiel mentionné, afin d'interdire le passage de tout signal électrique entre l'entrée et la sortie de ce dernier.

L'unité de traitement (24) présente en outre une pluralité de sorties (40), (41) (42) reliées respectivement à un groupe de visualisation (43), à une lampe de signalisation (44) et à une alarme sonore (45), lesquels constituent des moyens de signalisation (46) d'un état de fonctionnement particulier de l'appareillage (1).

L'unité (24) présente en outre une sortie (48) reliée à une borne (49) à laquelle on peut relier un dispositif commandé par l'unité (24) dans des conditions d'utilisation prédéterminées.

A titre d'exemple, une telle commande peut être constituée par une pompe capable de faire circuler le liquide à l'intérieur de l'enceinte (2) et qui pourrait être normalement stoppée dans des conditions d'alarme prédéterminées.

L'appareillage (1) fonctionne de la manière suivante: Les transducteur transmetteurs (3) et récepteur (4) sont diamétralement opposés par rapport à l'enceinte (2) et l'on prend soin de ne pas faire pénétrer d'air entre les surfaces de contact opposées. Dans des conditions normales de fonctionnement, le noyau (29) prend la position illustrée sur la figure ci-jointe, ce qui correspond à l'excitation de la bobine (19) grâce à la fermeture de l'interrupteur (17) et de l'interrupteur électronique (21).

Dans les conditions décrites ci-dessus, l'unité de traitement (24) déclenche, par exemple toutes les 200 millisecondes, le signal d'interruption précité à la sortie (38), ce qui entraîne, par l'intermediaire de l'amplificateur (7) l'arrêt de la transmission du signal d'alimentation du transducteur transmetteur (3) pendant une durée extrêmement brève, par exemple de quelques millisecondes.

Il est évident que pendant ces brèves périodes le transducteur récepteur (4) ne reçoit aucun signal acoustique et par conséquent n'émet aucun signal électrique qui, à travers l'amplificateur (8), le circuit détecteur de pics (9) et le comparateur (10) détecterait la présence d'une anomalie, qui est d'un point de vue fonctionnel, en tous points équivalente à la présence d'un fluide gazeux entre les transducteurs (3) et (4).

Le signal émis à la sortie du comparateur (10) parvient donç soit au relais (15), soit au circuit d'interface (13), à l'entrée (23) de l'unité de traitement (24). En choisissant le relais (15) et l'électro-aimant (20) de telle manière que le temps d'intervention soit nettement supérieur à celui de la brève interruption du signal électrique commandé par l'unité de traitement (24), on évite ainsi le déplacement de l'électro-aimant (20).

D'autre part, l'unité (24) s'assure que à toute absence de transmission du signal provenant du transducteur transmetteur (3), corresponde effectivement le déclenchement d'un signal d'alarme afin d'éviter qu'un défaut quelconque concernant par exemple l'amplificateur (8), le détecteur de pic (9) ou le comparateur (10) ne permette pas de détecter la chute du signal électrique à la sortie du transducteur récepteur (4).

Dans les conditions de travail citées ci-dessus, l'unité de traitement (24) contrôle aussi le fonctionnement correct du transducteur optique à réflexion (32) par exemple en interrompant périodiquement le signal d'alimentation de l'élément photoémetteur (33) et en vérifiant qu'à l'entrée (36) corresponde effectivement une chute du signal électrique déclenché par l'élément photo-récepteur (35) correspondant. Au cas où aucune anomalie ne se présente, l'unité de traitement (24) répète périodiquement les opérations de contrôle du circuit afin de contrôler constamment le fonctionnement des circuits essentiels de l'appareillage (1).

Au cas où se produirait une anomalie, à la suite de laquelle, la sortie du circuit comparateur (10) ne déclencherait pas un signal d'alarme au moment où le signal d'alimentation du transducteur transmetteur n'aurait pas lieu, l'unité (24) déterminerait, au moyen du circuit d'interface (26), l'ouverture de l'interrupteur d'interface (26), l'ouverture de l'interrupteur électronique (21) qui interromprait l'alimentation de la bobine (19). Ceci entraînerait le déplacement immédiat du noyau (29) de l'électro-aimant (20) et par conséquent la fermeture du conduit dans lequel circulerait le liquide de l'enceinte (2). Le contrôle du déplacement effectif du noyau (29) est effectué par le transducteur optique (32) dans lequel l'élément photo-récepteur (35) ne recevra pas de signal, le noyau (29) s'étant déplacé le long de l'axe (31). En conséquence, l'unité de traitement déclenche soit l'éclairage de la lampe de signalisation (44), soit l'alimentation de l'alarme acoustique (45).

D'autre part, l'absence éventuelle de déplacement du noyau (29) serait immédiatement découverte par le transducteur optique à réflexion (32) et signalé à l'opérateur en faisant apparaître par exemple un code prédéterminé sur le groupe de visualisation (43).

Une présence réelle de fluide gazeux entre les transducteurs (3) et (4) se manifeste par une diminution de l'amplitude du signal électrique provenant du transducteur récepteur (4) et ainsi par le déclenchement par le circuit du comparateur (10) d'une alarme continue qui comporte dans ce cas, soit l'ouverture de l'interrupteur (21) par l'unité de traitement (24), soit l'ouverture du contact (17) du relais (15), grâce à l'excitation de la bobine correspondante (14).

Evidemment même dans un tel cas peuvent être déclenchés l'alarme sonore (45), l'éclairage de la lampe (44), et également, s'il est avantageusement préparé, la présentation d'un code de signalisation de défauts sur le groupe de visualisation (43). Compte tenu de ce qui a été dit précédemment, l'unité de traitement (24) pourrait aussi envoyer un signal à la borne 49 et empêcher par exemple le fonctionnement d'une pompe qui commande le débit du liquide dans l'enceinte (2).

L'examen des caractéristiques de l'appareillage réalisé selon la présente invention met en évidence les avantages qu'il permet d'obtenir. Il est surtout en mesure de vérifier l'efficacité de la chaîne de transmissions comprenant l'oscillateur (6), l'amplificateur (7), les transducteurs (3) et (4), l'amplificateur (8), le détecteur (9) et le comparateur (10) avec une fréquente répétition de contrôle (par exemple 5 fois par seconde).

De cette manière, il est aussi possible de vérifier le positionnement correct des transducteurs (3) et (4) par rapport à l'enceinte (2); une introduction indésirée d'air entre les surfaces de contact opposées serait détectée comme une présence d'air à l'intérieur du liquide contenu dans l'enceinte (2) et signalée comme une situation anormale.

L'intervention de l'électro-aimant dans le cas de détection d'un fluide gazeux sous la forme de bulles, de mousse, ou de diminution du niveau de liquide de l'enceinte (2) au-dessous de la limite prédéterminée, se fait de deux façons indépendantes; à savoir: par le relais (15) et par l'unité de traitement (24) et ceci contribue à augmenter la sécurité de l'appareillage (1), même si l'un des deux moyens cités ci-dessus devenait défectueux. De plus, le contrôle périodique de l'efficacité du transducteur optique (32) à réflexion contribue à augmenter le niveau de sécurité de l'appareil (1).

Il est évident que des variantes ou modifications peuvent être apportées au mode de réalisation décrit pour l'appareil (1) sans pour autant sortir du cadre de la présente invention.

## Revendications

1. Appareillage (1) de détection et contrôle de la présence d'un fluide gazeux en relation avec un niveau prédéterminé de liquide dans une enceinte (2) et qui comprend:

une paire de transducteurs électro-acoustiques, respectivement transmetteur (3) et récepteur (4), susceptibles d'être placés face à face en positions diamétralement opposées par rapport à ladite enceinte (2) et en correspondance avec ledit niveau prédéterminé; le transducteur récepteur (4) étant apte à coopérer avec ledit transducteur transmetteur (3) et à émettre un signal électrique dont l'amplitude dépend de l'amplitude d'un signal acoustique fourni par le transducteur transmetteur (3) et de la quantité de fluide gazeux entre lesdits transducteurs (3, 4),

des moyens d'alimentation (6, 7) d'un signal électrique à fréquence ultrasonique audit transducteur transmetteur (3),

des moyens de comparaison (10) du signal électrique fourni par ledit transducteur récepteur (4) avec un signal électrique de référence; lesdits moyens de comparaison étant capables de déclencher un signal d'alarme chaque fois que ledit signal électrique fourni par ledit transducteur récepteur (4) s'écarte d'une valeur prédéterminée dudit signal de référence;

caractérisé par le fait de comprendre:

des moyens de traitement (24) reliés auxdits moyens d'alimentation (6, 7), et auxdits moyens de comparaison (10), capables, soit d'interrompre périodiquement l'envoi du signal électrique audit transducteur transmetteur (3) pour un laps de temps prédéterminé et de vérifier en correspondance la présence dudit signal d'alarme, soit de recevoir ledit signal d'alarme provoqué par la présence dudit fluide gazeux dans ladite enceinte (2) entre lesdits transducteurs transmetteur (3) et récepteur (4) et, dans chacun des deux cas, de piloter des moyens de commande (20) et/ou des moyens de signalisation (46).

2. Appareillage selon la revendication 1, caractérisé par le fait que les moyens d'alimentation (6, 7) comprennent essentiellement un oscillateur (6) et un amplificateur (7) connecté en aval de l'oscillateur (6).

3. Appareillage selon la revendication 2, caractérisé par le fait que l'amplificateur (7) est de type différentiel et comporte son propre générateur de courant piloté par un signal périodique provenant de la sortie (38) desdits moyens de traitement (24) et capable d'activer et de désactiver périodiquement ledit générateur de courant.

4. Appareillage selon l'une des revendications précédentes, caractérisé par le fait de comprendre un amplificateur (8) et un circuit détecteur de pic (9) entre le transducteur récepteur (4) et une entrée desdits moyens de comparaison (10).

5. Appareillage selon la revendication 4, caractérisé par le fait que l'amplificateur (8) est à filtre limité.

6. Appareillage selon l'une des revendications précédentes, caractérisé par le fait que lesdits moyens de commande comprennent essentiellement un électro-aimant (20) muni d'un noyau mobile (29) susceptible de commander la fermeture d'un conduit dans lequel circule le liquide contenu dans ladite enceinte (2).

7. Appareillage selon la revendication 6, dans lequel ledit conduit est délimité par des parois déformables élastiques, caractérisé par le fait que ledit noyau mobile (29) est capable de se déplacer axialement en déformant élastiquement les parois jusqu'à fermer ledit conduit.

8. Appareillage selon la revendication 6, caractérisé par le fait qu'une bobine d'excitation (19) dudit électro-aimant (20) peut être alimentée par la fermeture d'un interrupteur électrique (17) faisant partie d'un élément de commande (15) piloté par lesdits moyens de comparaison (10).

9. Appareillage selon la revendication 8, caractérisé par le fait que l'élément de commande (15) est un relais et que lesdits moyens de comparaison (10) sont reliés à une bobine d'excitation (14) dudit relais (15).

10. Appareillage selon l'une des revendications 6 à 9, caractérisé par le fait que ladite bobine d'excitation (19) dudit électro-aimant (20) est alimentée par un interrupteur (21) commandé par lesdits moyens de traitement (24).

11. Appareillage selon la revendication 10, caractérisé par le fait que ledit interrupteur (21) est du type électronique.

12. Appareillage selon la revendication 11, caractérisé par le fait que ledit interrupteur électronique (21) comprend au moins un transistor.

13. Appareillage selon l'une des revendications 6 à 12, caractérisé par le fait que ledit électro-aimant (20) présente un temps de réponse mécanique sensiblement supérieur à ladite période d'interruption dudit signal électrique fourni audit transducteur transmetteur (3).

14. Appareillage selon l'une des revendications 6 à 13, caractérisé par le fait de comprendre des moyens de contrôle (32) capables de vérifier le déplacement axial dudit noyau mobile (29).

15. Appareillage selon la revendication 14, caractérisé par le fait que lesdits moyens de contrôle (32) sont placés à proximité d'une extrémité (31) dudit noyau (29) en position opposée par rapport à la partie dudit noyau (29) commandant la fermeture dudit conduit.

16. Appareillage selon la revendication 14 ou la revendication 15, caractérisé par le fait que lesdits moyens de contrôle (32) comprennent un transducteur optique à réflexion constitué par un élément photoémetteur (33) et par un élément photorécepteur (35).

17. Appareillage selon la revendication 16, caractérisé par le fait que lesdits éléments photoémetteur (33) et photorécepteur (35) sont connectés à la sortie (34) et l'entrée (36) desdits moyens de traitement (24).

18. Appareillage selon la revendication 17, caractérisé par le fait que lesdits moyens de traitement (24) sont susceptibles de fournir par la sortie (34) un signal d'alimentation intermittent dudit élément photoémetteur (33) et de vérifier à l'entrée (36), la réception, du côté de l'élément photorécepteur (35), du signal électrique correspondant.

19. Appareillage selon l'une des revendications précédentes, caractérisé par le fait que lesdits moyens de signalisation (46) sont de type optique (43, 44) et/ou acoustique (45).

20. Appareillage selon la revendication 19, caractérisé par le fait que lesdits moyens de signalisation de type optique (43, 44) comprennent un groupe de visualisation (43) d'informations codifiées.

21. Appareillage selon l'une des revendications précédentes, caractérisé par le fait que lesdits moyens de traitement (24) comprennent un microprocesseur.

**Patentansprüche**

1. Apparatur (1) zur Feststellung und Überwachung des Vorhandenseins eines gasförmigen Fluids in Bezug auf ein vorbestimmtes Niveau einer Flüssigkeit in einem Behälter (2), mit

einem Paar elektroakustischer Übertragungseinrichtungen, bzw. einem Sender (3) und einem Empfänger (4), die diametral gegenüberliegend am Behälter (2) und entsprechend diesem vorbestimmten Niveau angeordnet werden können; wobei die Empfangseinrichtung (4) geeignet ist, mit der Sendeeinrichtung (3) zusammenzuarbeiten und ein elektrisches Signal auszusenden, dessen Amplitude abhängt von der Amplitude eines akustischen Signals, das von der Sendeeinrichtung (3) geliefert wird, und von der Menge des gasförmigen Fluids zwischen den Übertragungseinrichtungen (3, 4),

einer Einrichtung (6, 7) zur Lieferung eines elektrischen Signals mit Ultraschallfrequenz an der Sendeeinrichtung (3),

einer Einrichtung (10) zum Vergleich des elektrischen Signals von der Empfangseinrichtung (4) mit einem elektrischen Referenzsignal; wobei die Einrichtung zum Vergleich jedesmal ein Alarmsignal auslösen kann, wenn das von der Empfangseinrichtung (4) gelieferte elektrische Signal um einen vorbestimmten Wert des Referenzsignals abweicht;

dadurch gekennzeichnet, daß die Apparatur eine Verarbeitungseinrichtung (24) aufweist, die mit der Liefereinrichtung (6, 7) und der Vergleichseinrichtung (10) verbunden ist, und die in der Lage ist, entweder periodisch das Aussenden des elektrischen Signals zur Sendeeinrichtung (3) über einen gewissen vorbestimmten Zeitraum zu unterbrechen und entsprechend das Vorhandensein des Alarmsignals zu überprüfen, oder das Alarmsignal zu empfangen, das ausgelöst wird durch das Vorhandensein des gasförmigen Fluids im Behälter (2) zwischen der Sendeeinrichtung (3) und der Empfangseinrichtung (4), und in jedem der beiden Fälle die Schaltungseinrichtung (20) und/oder eine Einrichtung zur Signalgebung (46) zu steuern.

2. Apparatur nach Anspruch 1, dadurch gekennzeichnet, daß die Lieferungseinrichtung (6, 7) im wesentlichen einen Oszillator (6) und einen Verstärker (7) aufweist, der stromabwärts des Oszillators (6) angeschlossen ist.

3. Apparatur nach Anspruch 2, dadurch gekennzeichnet, daß der Verstärker (7) ein Differtialverstärker ist und seinen eigenen Stromerzeuger aufweist, der von einem periodischen Signal gesteuert wird, das ausgeht vom Ausgang (38) der Verarbeitungseinrichtung (24) und das den Stromerzeuger periodisch aktivieren und entaktivieren kann.

4. Apparatur nach einem der vorhergehenden Ansprüche, dadurch gekennzeichnet, daß sie einen Verstärker (8) und eine Spitzendetektorschaltung (9) zwischen der Empfangseinrichtung (4) und einem Eingang der Vergleichseinrichtung (10) aufweist.

5. Apparatur nach Anspruch 4, dadurch gekennzeichnet, daß der Verstärker (8) mit einem Begrenzungsfilter ausgestattet ist.

6. Apparatur nach einem der vorhergehenden Ansprüche, dadurch gekennzeichnet, daß die Steuerungseinrichtung im wesentlichen einen Elektromagneten (20) aufweist, der mit einem beweglichen Kern (29) versehen ist, der geeignet ist, das Schließen einer Leitung zu steuern, in der die im Behälter (2) enthaltene Flüssigkeit zirkuliert.

7. Apparatur nach Anspruch 6, wobei die Leitung von verformbaren elastischen Wänden begrenzt wird, dadurch gekennzeichnet, daß der bewegliche Kern (29) sich axial verschieben kann, wobei er die Wände elastisch verformt, bis die Leitung sich schließt.

8. Apparatur nach Anspruch 6, dadurch gekennzeichnet, daß eine Erregerspule (19) des Elektromagneten (20) durch das Schließen eines elektrischen Unterbrechers (17) versorgt wird, der zu einem Steuerelement (15) gehört, das gesteuert wird von der Vergleichseinrichtung (10).

9. Apparatur nach Anspruch 8, dadurch gekennzeichnet, daß das Steuerelement (15) ein Relais ist und daß die Vergleichseinrichtung (10) verbunden ist mit einer Erregerspule (14) des Relais (15).

10. Apparatur nach einem der Ansprüche 6 bis 9, dadurch gekennzeichnet, daß die Erregerspule (19) des Elektromagneten (20) versorgt wird von einem Unterbrecher (21), der von der Verarbeitungseinrichtung (24) gesteuert wird.

11. Apparatur nach Anspruch 10, dadurch gekennzeichnet, daß der Unterbrecher (21) elektronisch ausgebildet ist.

12. Apparatur nach Anspruch 11, dadurch gekennzeichnet, daß der elektronische Unterbrecher (21) wenigstens einen Transistor enthält.

13. Apparatur nach einem der Ansprüche 6 bis 12, dadurch gekennzeichnet, daß der Elektromagnet (20) eine mechanische Ansprechzeit aufweist, die im wesentlichen über der Unterbrechungszeit des elektrischen Signals liegt, das der Sendeeinrichtung (3) geliefert wird.

14. Apparatur nach einem der Ansprüche 6 bis 13, dadurch gekennzeichnet, daß sie Kontrolleinrichtungen (32) enthält, die die axiale Verschiebung des beweglichen Kerns (29) überprüfen können.

15. Apparatur nach Anspruch 14, dadurch gekennzeichnet, daß die Kontrolleinrichtungen (32) in der Nähe eines Endes (31) des Kerns (29) gegenüber einem Teil des Kerns (29) liegt, der das Schließen der Leitung steuert.

16. Apparatur nach Anspruch 14 oder 15, dadurch gekennzeichnet, daß die Kontrolleinrichtung (32) eine optische Reflexionsübertragungseinrichtung aufweist, die von einem Licht sendenden Element (33) und einem Licht empfangenden Element (35) gebildet wird.

17. Apparatur nach Anspruch 16, dadurch gekennzeichnet, daß die Licht sendenden Elemente (33) und die Licht empfangenden Elemente (35) mit dem Ausgang (34) und dem Eingang (36) der Verarbeitungseinrichtung (24) verbunden sind.

18. Apparatur nacch Anspruch 17, dadurch gekennzeichnet, daß die Verarbeitungseinrichtung (24) geeignet ist, durch den Ausgang (34) ein intermittierendes Versorgungssignal an das Licht sendende Element (33) zu liefern, und am Eingang (36) auf der Seite des Licht empfangenden Elementes (35) den Empfang des entsprechenden elektrischen Signals zu überprüfen.

19. Apparatur nach einem der vorhergehenden Ansprüche, dadurch gekennzeichnet, daß die Signalgebungseinrichtung (46) optisch (43, 44) und/oder akustisch (45) ausgebildet ist.

20. Apparatur nach Anspruch 19, dadurch gekennzeichnet, daß die optische Signalgebungseinrichtung (43, 44) eine Gruppe (43) zur Sichtbarmachung kodifizierter Informationen aufweist.

21. Apparatur nach einem der vorhergehenden Ansprüche, dadurch gekennzeichnet, daß die Verarbeitungseinrichtung (24) einen Microprozessor aufweist.

Claims

1. An installation (10) for detecting and controlling the presence of a gaseous fluid in relation to a predetermined level of liquid in a vessel (2) and which comprises:

a pair of electro-acoustic transducers, a transmitter (3) and a receiver (4) respectively, capable of being placed face to face in diametrically opposed positions in relation to the said circuit (2) and in accordance with the said predetermined level; the receiver transducer (4) being capable of cooperating with the said transmitter transducer (3) and of emitting an electric signal whose amplitude depends on the amplitude of an acoustic signal provided by the transmitter transducer (3) and on the quantity of gaseous fluid between the said transducers (3, 4),

means (6, 7) for feeding an electric signal at an ultrasonic frequency to the said transmitter transducer (3),

means (10) for comparing the electric signal provided by the said receiver transducer (4) with an electric reference signal; the said comparison means being capable of triggering an alarm signal whenever the said electric signal provided by the said receiver transmitter (4) deviates from a predetermined value of the said reference signal;
characterized in that it comprises:

processing means (24) connected to the said feeding means (6, 7) and to the said comparison means (10) which are capable of either periodically interrupting the send of the electric signal to the said transmitter transducer (3) for a predetermined space of time and of correspondingly verifying the presence of the said alarm signal, or receiving the said alarm signal produced by the presence of the said gaseous fluid in the said vessel (2) between the said transmitter transducer (3) and receiver transducer (4) and, in each of the two cases, of directing the control means (20) and/or the signalling means (46).

2. An installation according to claim 1, characterized in that the feeding means (6, 7) mainly consist of an oscillator (6) and an amplifier (7) connected down the line from the oscillator (6).

3. An installation according to claim 2, characterized in that the amplifier (7) is of the differential type and comprises its own current generator controlled by a periodic signal coming from the output (38) of the said processing means (24), and being capable of periodically activating and stopping the said current generator.

4. An installation according to one of the preceding claims, characterized in that it comprises an amplifier (8) and a peak detector circuit (9) between the receiver transducer (4) and an input of the said comparison means (10).

5. An installation according to claim 1, characterized in that the amplifier (8) is of the limited filter type.

6. An installation according to one of the preceding claims, characterized in that the said control means mainly comprise an electromagnet (20) provided with a movable core (29) capable of actuating the closing of a conduit wherein there circulates the liquid contained in the said vessel (2).

7. An installation according to claim 6, wherein the said conduit is delimited by deformable elastic walls, characterized in that the said movable core (29) is capable of axial displacement by elastically deforming the walls until the said conduit is closed.

8. An installation according to claim 6, characterized in that the coil (19) for exciting the said electromagnet (20) can be energized by the closing of an electric switch (17) forming part of a control element (15) which is governed by the said comparison means (10).

9. An installation according to claim 8, characterized in that the control element (15) is a relay and in that the said comparison means (10) are connected to a coil (14) for energizing the said relay (15).

10. An installation according to one of claims 6 to 9, characterized in that the said coil (19) for exciting the said electromagnet (20) is energized by a switch (21) controlled by the said processing means (24).

11. An installation according to claim 10, characterized in that the said switch (21) is of the electronic type.

12. An installation according to claim 11, characterized in that the said electronic switch comprises at least one transistor (13).

13. An installation according to one of claims 6 to 12, characterized in that the said electromagnet (20) has a mechanical response time which is substantially longer than the said interruption period of the said electric signal passed to the said transmitter transducer (3).

14. An installation according to one of claims 6 to 13, characterized in that it comprises control means (32) capable of verifying the axial displacement of the said movable core (29).

15. An installation according to claim 14, characterized in that the said control means are placed near one end (31) of the said core (29) in a position which is on the opposite side in relation to the part of the said core (29) actuating the closure of the said conduit.

16. An installation according to claim 14 or claim 15, characterized in that the said control means (32) comprise an optical reflection transducer constituted by a photoemitter element (33) and by a photoreceiver element (35).

17. An installation according to claim 6, characterized in that the photoemitter (33) and photoreceiver (35) elements are connected at the output (34) and the input (36) of the said processing means (24).

18. An installation according to claim 17, characterized in that the said processing means (24) are capable of providing via their output (34) a signal for the intermittent energization of the said photoemitter element (33) and of verifying at the input (36) that the corresponding electric signal has been received as far as the photoreceiver element (35) is concerned.

19. An installation according to one of the preceding claims, characterized in that the said signalling means (46) are of the optical type (43, 44) and/or acoustic type (45).

20. An installation according to claim 19, characterized in that the said optical type signalling means (43, 44) comprise an unit (43) for the display of coded information.

21. An installation according to one of the preceding claims, characterized in that the said processing means (24) comprise a microprocessor.